# EUROPEAN PATENT SPECIFICATION

(11) **EP 0 560 515 B1**
(45) Date of publication and mention of the grant of the patent: **02.01.1997**
(21) Application number: 93301499.5
(22) Date of filing: 26.02.1993
(51) Int. Cl.: B60R 11/00

(54) **A holder for a warning triangle of a vehicle**
Warndreieckhalterung eines Fahrzeuges
Support pour triangle de signalisation de véhicule

(30) Priority: 11.03.1992 FI 921054
(43) Date of publication of application: 15.09.1993
(73) Proprietor: OY TALMU AB, 24100 SALO (FI)
(72) Inventor: Ahlfors, Leif, SF-25650 Stromma (FI)
(74) Representative: Eyles, Christopher Thomas

(56) References cited:
- DE-A- 2 839 606
- DE-U- 7 306 316
- DE-U- 8 606 426
- GB-A- 2 193 471
- US-A- 4 192 090

## Description

The invention relates to a holder for attaching a warning triangle onto an essentially planar surface of a vehicle, particularly for attaching a warning triangle onto the lower surface of the boot lid of a vehicle, the holder comprising a plastic lower support member that is to be mounted between said planar surface and the reflecting surface of the warning triangle and a plastic upper support member that is to be mounted above the reflecting surface of the warning triangle, the upper support member being moveable in relation to the lower support member in order that the warning triangle may be placed between the lower and upper support members and removed therefrom, the holder further comprising locking means for attaching the upper support member to the lower support member to keep the warning triangle between the support members when it is not in use.

Warning triangles for vehicles are conventionally packed in plastic boxes and placed somewhere in the boot. The warning triangle is generally placed next to the spare tyre, wherefore it is difficult to take out.

It is known to attach a warning triangle onto the lower surface of the boot lid of a vehicle in such a manner that it attaches to the steel rails stiffening the lid. Since a warning triangle attached in this manner is quick to take out, some vehicle manufacturers have started using this kind of attachment. In some extreme situations it is even possible that the warning triangle is not unfastened from the boot lid at all but the lid is only opened, whereby the reflecting surfaces of the warning triangle come at least partially into sight. The attachment to the lid has become possible on account of the modern small and light warning triangles. The conventional plastic box of the warning triangle has thereby been disposed of.

A known holder for attaching a warning triangle to the boot lid primarily comprises a U-shaped rail-type plastic member with a lower support surface and an upper support surface, the surfaces being articulated to each other at the joint. The warning triangle is attached to the rail in such a manner that it is supported by the lower support member on the one side and by the upper support member on the other side, the support members being formed of the lateral parts of the U-shaped plastic member. The warning triangle is clamped between the support members by a manually driveable locking means of the type of a butterfly nut. The lower support member is fastened with screws to the strut rails of the boot lid.

The problem with the known holder is that it does not enable quick unfastening of the warning triangle from the lid. It is especially difficult for old or handicapped persons to undrive the butterfly nuts of the holder, but this may also prove difficult for regular drivers. Further, since people often act nervously in an emergency, the detachable butterfly nuts get easily lost. Another problem is that the holder cannot be mounted on a vehicle unless the boot lid has a certain type of strut rail structure.

The object of the present invention is to eliminate the above problems. For this to be achieved, the holder of the invention is primarily characterised in that the lower support member comprises an elongated plate-like frame which is sufficiently long to be capable of supporting the warning triangle from below along essentially the entire length of the warning triangle and which operates as a mounting for attaching the holder onto said surface, the frame having slot means for fastening means and end supports at each end of the frame, while the holder further comprises two upper support members, one at each end of the frame at least one of which is provided with releasable locking means and the releasable locking means are quick-release fasteners which are arranged close to at least one end of the frame.

Advantageously, the movable upper support members and the quick-release fasteners are arranged close to both ends of the frame, which makes it possible to unfasten the warning triangle from the holder merely by lifting after the quick-release fasteners have been unfastened. It is advantageous that the quick-release fasteners which are advantageously made in one piece with the frame and the upper support member are such that they provide a clamp fastening between the upper support member and the frame since this requires little manual power. In addition, a clamp fastening is not slackened by shaking or vibration caused by the motion of the vehicle, nor by the use of the locking means, nor by even strong strokes caused by the locking the boot lid. The other advantageous embodiments of the holder according to the invention are disclosed in accompanying claims 5 to 11.

The principal advantages of the holder according to the present invention are that the warning triangle can be very easily and quickly detached from the holder without any technical knowledge and it can be easily mounted on vehicles of different makes. Further, there is no risk of losing any parts. The advantages also include the light weight of the holder and the possibility of attaching the warning triangle to the holder either as a triangle or in a folded form.

In the following the invention is described in greater detail by a preferred embodiment with reference to the attached drawing, wherein
Fig. 1 shows a top view of the holder mounted on the boot lid 1 of a vehicle,
Fig. 2 shows a side view of the holder partially as a cross-sectional view,
Figs. 3 to 6 show cross-sectional views along the lines III-III, IV-IV, V-V and VI-VI of Fig. 1,
Fig. 7 shows an enlarged view of the locking means at the right-hand end of Fig. 2 and a side view illustrating their operation,
Fig. 8 shows a top view of the locking arrangement of Fig. 7,
Fig. 9 shows an enlarged cross-sectional view of the locking means at the left-hand end of Fig. 2, and
Fig. 10 shows the locking means at the left-hand end of the holder in a closed position.

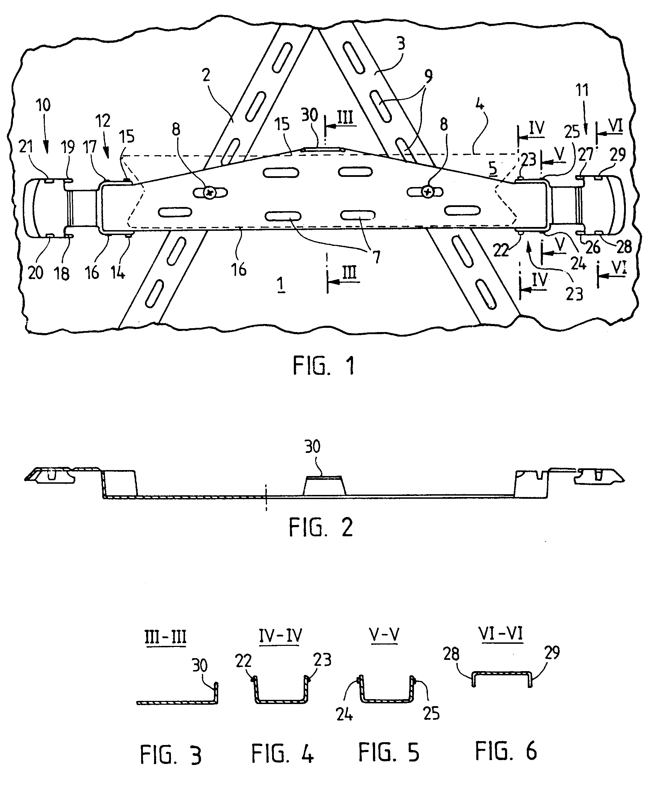

In Fig. 1 the holder is mounted onto metal braces 2, 3 of the boot lid 1 of a vehicle. The dashed line indicates a warning triangle 4 placed in a holder. The warning triangle 4 is placed in the holder in a position where it requires as little space as possible. Thereby only one reflecting surface 5 of the warning triangle is visible. Alternatively, the warning triangle can be placed in the holder as a triangle, whereby all the three reflecting surfaces thereof are visible. This ensures that the warning triangle can be erected quickly at the roadside since the triangle need not be assembled first.

The holder comprises an elongated plate-like frame 6, which serves as the mounting for the holder. The frame 6 has several slots 7, two of which are provided with key-like fastening means 8 with which the frame can be fastened to slots 9 in the metal braces 2, 3 of the lid without it being necessary to bore new mounting slots. The slots 7 are elongated, which makes it easier to find the place where the slots 7 and 9 are in alignment and where the holder is to be mounted.

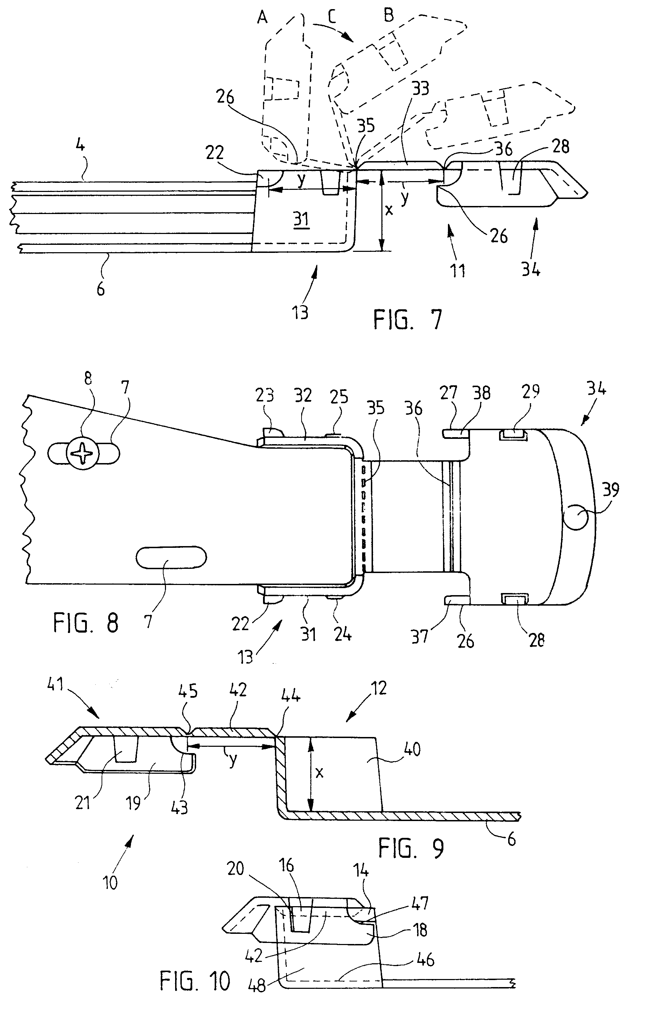

The frame 6 has identical upper support members 10 and 11 at both ends thereof, the support members being shown in an open position, i.e. in a position where the warning triangle can be detached from the holder. When the upper support members 10, 11 are in a closed position, cf. Fig. 10, they cover the tips of the warning triangle 4, whereby the warning triangle remains between identical end portions 12, 13 and upper support members 10, 11 at both ends of the frame 6, whereby the end portions serve as lower support members. The end portions 12, 13 and the upper support members 10, 11 have locking means 14 - 29, with which the upper support members 10, 11 can be locked to the end portions 12, 13. The operation and structure of the locking means will be discussed below.

In Figs. 1 and 2 the reference number 30 indicates a support member that supports the warning triangle in a position shown in Fig. 1 at one side 15' thereof. An opposite side 16' does not require a support member of this kind since it is supported by the end portions 12 and 13.

Figs. 3 to 6 show the cross-sections III-III, IV-IV, V-V and VI-VI of Fig. 1. It appears from Figs. 4 to 6 that the parts 22 to 25 of the locking means are projecting parts and 28 and 29 are slots used in the locking operation.

Figs. 7 and 8 show a more detailed view of the quick-release fastener arrangement formed by the lower and upper support members. The end portion 13 is turned upward from the plane of the frame and it comprises two lateral parts 31 and 32 which are spaced from one another within a distance that essentially corresponds to the breadth of the warning triangle 4 in the holder. Onto the outer surfaces of the lateral parts 31, 32 are provided projecting parts 22, 23. The upper support member 11 comprises two parts: a connector 33 close to the frame 6 and a cover member 34 further away from the frame. The connector 33 is articulated to the end portion 13 by means of a film hinge 35 that is essentially transverse to the frame 6, the upper support member 11 further comprising a second film hinge 36 spaced from and parallel to the first film hinge, the hinge arrangement making it possible to move the upper support member 11 from the open position indicated by a continuous line towards the frame 6 onto the end portion 13 in the manner indicated by a dashed line. When the end portion 13 is in position A, locking tips 26, 27 arranged on the lateral parts of the cover member 34 are brought to alignment with the projecting parts 22, 23. When the upper support member 11 is to be moved from position A to a locking position, the cover member 34 is pressed downward, simultaneously turning it to the right as shown by arrow C, whereby clamping surfaces 37, 38 of the locking tips 26, 27 come into contact with the projecting parts 22, 23 and are covered by them, whereafter the cover member is not capable of being lifted directly upward without being first moved sideward. To lock the cover member 34 tightly in such a manner that it is subjected to a load when the boot lid 1 of a vehicle is slammed shut, the lateral parts of the cover member are provided with slots 28, 29, the edges of the slots interlocking with the projecting parts 24, 25 in the end portion in the manner of a snap fastener.

The end portion and cover member together with the locking means work flawlessly when the first film hinge 35 is arranged within a distance X from the plane of the frame, the distance essentially corresponding to the thickness of the warning triangle when it is in its holder, the second film hinge 36 and the projecting part 22 being spaced from the first film hinge 35 at an essentially identical distance Y. This locking means arrangement is also advantageous in that the film hinges are not subjected to any load when the triangle is in the holder.

A point 39 on the top surface of the cover member 34 is provided with a mark, e.g. an arrow, indicating that the end of the cover member is to be pulled upward when the warning triangle is to be detached from the holder.

The upper support member 11 need not extend far beyond the ends of the frame 6, i.e. to the right from the end portion 13, in order that the warning triangle 4 might be released and detached from the holder. Thus, the upper support member 11 need not be turned to the position indicated by the continuous line in Fig. 7 but it is sufficient that it is turned to position B. Thus the two film hinges of the invention also make it possible to mount the holder in such boot lids which for one reason or another are too small for holders that are larger than the length of a side of a warning triangle and to mount the holder asymmetrically close to an edge of the boot lid.

For clarity's sake, Fig. 9 shows a partly cross-sectional view of the (left-hand) end of the holder. One lateral part of the end portion is indicated by the reference number 40, a cover member by the number 41, a connector by the number 42, a clamping surface of the locking tip 19 by the number 43, a first film hinge by the number 44 and a second film hinge by the number 45.

In Fig. 10 the left-hand end of the holder is shown in a closed position, whereby the clamping surface 41 of the locking tip 18 is tightly against the projecting part 14 and the projecting part 16 is in the slot 20. It can be seen from the figure that the warning triangle is placed between the connector 42 and a bottom 46 of the end portion. A clamping surface is indicated by the number 47 and a lateral part by the number 48.

The holder according to the invention is manufactured in one piece preferably from polypropene mixed with about 20% of talc as a filling agent. The frost resistance of the material is good and it is applicable to the manufacture of film hinges.

The invention is described above only by one preferred embodiment, and it is to be understood that the details of the invention may vary within the scope of the attached claims. Therefore, it is possible that the cover member is not connected to the frame of the holder by means of a hinge arrangement but instead, the cover member can be pulled away from the warning triangle e.g. by means of a slide rail arrangement. However, in this kind of arrangement the holder comprises more than one part, which is naturally not desirable with respect to the manufacture. In addition, the slots 7 may comprise one or more chain links along essentially the entire length of the frame, whereby the distance between the fastening means 8 can be steplessly adjusted to suit for boot lids of all structures. In view of the manufacture of the holder and the requirements set for the firm attachment of the holder, the advantageous number of chain links is two. It is also possible to arrange releasable locking means only on one side of the frame 6, but the warning triangle will then have to be unfastened from the holder by additionally moving it sideward. Correspondingly, when the warning triangle is placed in the holder, it must be slipped sideward between the undisplaceable lower and upper support members. The parts 24 and 25 of the snap fastener may be slots, whereby the parts 28 and 29 are projecting parts (cf. Fig. 7). By this solution the same operation can be conducted as by the embodiment shown in the figure.

## Claims

1. A holder for attaching a warning triangle onto an essentially planar surface of a vehicle, such as the lower surface of the boot lid (1) of a vehicle, the holder comprising a plastic lower support member (6) that is to be mounted between a planar surface of a vehicle to which a warning triangle is to be attached and a reflecting surface (5) of the warning triangle (4) and a plastic upper support member (10, 11) that is to be mounted above the reflecting surface (5) of the warning triangle (4), the upper support member being movable in relation to the lower support member in order that the warning triangle may be placed between the lower and upper support members and removed therefrom, the holder further comprising locking means (14-29) for attaching the upper support member to the lower support member to keep the warning triangle between the support members (6, 10, 11) when it is not in use, characterised in that the lower support member comprises an elongated plate-like frame (6) which is sufficiently long to be capable of supporting the warning triangle (4) from below along essentially the entire length of the warning triangle and which operates as a mounting for attaching the holder onto the surface, that the frame has slot means (7) for fastening means (8) and end supports (12, 13) at each end of the frame (6), that the holder comprises two upper support members (10,11), one at each end of the frame (6), at least one of which is provided with releasable locking means (14-21 and/or 22-29), and that the releasable locking means are quick-release fasteners (14-21 and/or 22-29) which are arranged close to at least one end of the frame (6).

2. A holder according to claim 1, characterised in that the quick-release fasteners (14-21 and/or 22-29) are made of one piece with the frame (6) and the upper support member (10,11).

3. A holder according to claim 1, characterised in that the quick-release fasteners (14-21 and/or 22-29) are arranged close to both ends of the frame (6).

4. A holder according to claim 1, charcterised in that the quick-release fastenrs (14-21 and/or 22-29) are such that they provide a clamp fastening between the upper support member (10, 11) and the frame (6).

5. A holder according to claim 4, characterised in that the end supports (12, 13) at each end of the frame (6) are turned upward and that the upper support member (10, 11) comprises two parts, a connector (33, 42) close to the frame (6) and a cover member (34, 43) further away from the frame, and is articulated to the end support (12, 13) by means of a first film hinge (35, 44) that is essentially transverse to the frame (6), the upper support member (10, 11) further comprising a second film hinge (36, 45) spaced from and parallel to the first film hinge (35, 44), and the hinge arrangement making it possible to move the upper support member (10, 11) away from the warning triangle placed under it in such a manner that the warning triangle can be detached from the holder without it being necessary for the upper support member (10, 11) to extend far beyond the ends of the frame (6).

6. A holder according to claim 5, characterised in that the end supports (12, 13) comprise two lateral parts (31 and 32, 40 and 48) which are spaced from one another by a distance that essentially corresponds to the breadth of the warning triangle in the holder, the quick-release fasteners comprising two projecting parts (14 and 15, 22 and 23) which are arranged onto the outer surfaces of the lateral parts and the cover member (34, 41) of the upper support member (10, 11) comprising two locking tips (18 and 19, 26 and 27) arranged onto the sides thereof, the locking tips having clamping surfaces (37, 38, 43, 47) that come into contact with the projecting parts (14, 15, 22, 23) when the upper support member is moved by the film hinges (35, 36, 44, 45) to a locking position to provide a clamp fastening between the upper support member and the lateral part (31, 32, 40, 48).

7. A holder according to claim 6, **characterised** in that the first film hinge (35, 44) is arranged within a distance X from the plane of the frame (6), the distance essentially corresponding to the thickness of the warning triangle in the holder, whereby the second film hinge (36, 45) and the projecting part (14, 15, 22, 23) are within essentially the same distance Y from the first film hinge.

8. A holder according to claim 6 or 7, **characterised** in that the lateral parts (31, 32, 40, 48) and the cover member (34, 41) further comprise snap fasteners (16, 17, 20, 21, 24, 25, 28, 29) with projecting parts and slots, the fasteners snapping in place when the locking tips (18, 19, 26, 27) of the upper support member are clamped against the projecting part (14, 15, 22, 23) of the lateral part and being closer to the ends of the frame (6) than the locking means (14, 15, 18, 19, 22, 23, 26, 27) that can be locked by clamping when the quick-release fasteners (14 - 29) are locked.

9. A holder according to claim 8, **characterised** in that the snap fasteners comprise projecting parts (16, 17, 24, 25) at the sides of the lateral parts, the projecting parts coming into contact with the slots (20, 21, 28, 29) arranged to the sides of the cover member when the means (14, 15, 18, 19, 22, 23, 26, 27) that can be locked by clamping are in a locking position.

10. A holder according to any one of the preceding claims, **characterised** in that the slot means of the frame (6) comprise several elongated slots (7) to enable the mounting of the holder on boot lids with different strut rails (2, 3).

11. A holder according to any one of the preceding claims, **characterised** in that it is manufactured from polypropene.

## Patentansprüche

1. Halter zur Anbringung eines Warndreieckes an eine im wesentlichen ebene Fläche eines Fahrzeuges, wie z.B. die untere Fläche eines Kofferraumdekkels (1) eines Fahrzeuges, wobei die Halterung ein unteres Halteteil (6) aus Plastik umfaßt, welches zwischen einer ebenen Fläche eines Fahrzeuges, an der ein Warndreieck zu befestigen ist und einer reflektierenden Oberfläche (5) des Warndreieckes (4) zu montieren ist und ein oberes Halteteil (10, 11) ans Kunststoff, welches oberhalb der reflektierenden Fläche (5) des Warndreieckes (4) zu montieren ist, wobei das obere Halteteil relativ zu dein unteren Halteteil beweglich ist, so daß das Warndreieck zwischen den unteren und oberen Teilen angeordnet und von dort entfernt werden kann, wobei der Halter darüberhinaus Verschlußeinrichtungen (14 bis 29) umfaßt, zur Anbringung des oberen Halteteiles an dem unteren Halteteil, um das Warndreieck zwischen den Halteteilen (6, 10, 11) zu halten, wenn es nicht in Gebrauch ist, **dadurch gekennzeichnet, daß** das untere Halteteil einen, länglichen tellerförmigen Rahmen (6) umfaßt, der ausreichend lang ist, um in der Lage zu sein, das Warndreieck (4) von unterhalb entlang im wesentlichen der gesamten Länge des Warndreieckes zu halten und der als eine Befestigung zur Anbringung des Halters an der Fläche wirkt, daß der Rahmen Schlitzanordnungen (7) für Befestigungseinrichtungen (8) und Endhalterungen (12, 13) an jedem Ende des Rahmens (6) hat, daß der Halter zwei obere Halteteile (10, 11) umfaßt, einer an jedem Ende des Rahmens (6), von denen zumindest einer mit lösbaren Verriegelungseinrichtungen (14 bis 21 und/oder 22 bis 29) versehen ist, und daß die lösbaren Verschlußeinrichtungen schnell öffnende Befestigungen (14 bis 21 und/oder 22 bis 29) sind, die in der Nähe von zumindest einem Ende des Rahmens (6) angeordnet sind.

2. Halter nach Anspruch 1, **dadurch gekennzeichnet, daß** die Schnellöffnungsbefestigungen (14 bis 21 und/oder 22 bis 29) als ein Stück mit dein Rahmen (6) und dein oberen Halteteil (10, 11) ausgebildet sind.

3. Halter nach Anspruch 1, **dadurch gekennzeichnet, daß** die Schnellöffnungsbefestigungen (14 bis 21 und/oder 22 bis 29) in der Nähe beider Enden des Rahmens (6) angeordnet sind.

4. Halter nach Anspruch 1, **dadurch gekennzeichnet, daß** die Schnellöffnungsbefestigungen (14 bis 21 und/oder 22 bis 29) derart sind, daß sie eine Klemmbefestigung zwischen dem oberen Halteteil (10, 11) und dem Rahmen (6) bilden.

5. Halter nach Anspruch 4, **dadurch gekennzeichnet, daß** die Endhalterungen (12, 13) an jedem Ende des Rahmens (6) nach oben gedreht sind und daß das obere Halteteil (10, 11) zwei Teile umfaßt, einen Verbinder (33, 42) in der Nähe des Rahmens (6) und ein Abdeckteil (34, 43) welches weiter von dein Rahmen weg ist und an der Endhalterung (12, 13) über ein erstes Filmscharnier (35, 44) gegliedert ist, welches im wesentlichen quer zum Rahmen (6) liegt, wobei das obere Halteteil (10, 11) darüberhinaus ein zweites Filmscharnier (36, 45) umfaßt, welches von dem ersten Filmscharnier (35, 44) beabstandet und parallel dazu liegt und wobei es die Scharnieranordnung möglich macht, das obere Haltsteil (10, 11) von dem Warndreieck, welches unter ihr angeordnet ist, in einer Art wegzubewegen, daß das Warndreieck von dein Halter gelöst werden kann, ohne daß es notwendig ist, das obere Halteteil (10, 11) weit über die Enden des Rahmens (6) hinaus zu verlängern.

6. Halter nach Anspruch 5, **dadurch gekennzeichnet, daß** die Endhalterungen (12, 13) zwei seitliche Teile (31 und 32, 40 und 48) umfassen, die mit einer Distanz voneinander beabstandet sind, die im wesentlichen der Breite des Warndreieckes in dem Halter entspricht, wobei die Schnellöffnungsbefestigungen zwei vorspringende Teile (14 und 15, 22 und 23) umfassen, welche auf der äußeren Fläche der seitlichen Teile und dem Abdeckteil (34, 41) des oberen Halteteiles (10, 11) angeordnet sind, welches zwei Verriegelungsfortsätze (18 und 19, 26 und 27) umfaßt, die an dessen Seite angeordnet sind, wobei die Verriegelungsfortsätze Klammerflächen (37, 38, 43, 47) haben, die in Kontakt mit den vorspringenden Teilen (14, 15, 22, 23) kommen, wenn das obere Halteteil durch die Filmscharniere (35, 36, 44, 45) in eine Verriegelungsposition bewegt wird, um eine Klemmbefestigung zwischen dein oberen Halteteil und dein seitlichen Teil (31, 32, 40, 48) vorzusehen.

7. Halter nach Anspruch 6, **dadurch gekennzeichnet, daß** das erste Filmscharnier (35, 44) innerhalb einer Distanz X von der Ebene des Rahmens (6) angeordnet ist, wobei die Distanz im wesentlichen mit der Dicke des Warndreieckes in dein Halter korrespondiert, wobei das zweite Filmscharnier (36, 45) und der vorspringende Teil (14, 15, 22, 23) im wesentlichen innerhalb derselben Distanz Y von dem ersten Filmscharnier liegen.

8. Halter nach Anspruch 6 oder 7, **dadurch gekennzeichnet, daß** die seitlichen Teile (31, 32, 40, 48) und das Abdeckteil (34, 41) darüberhinaus Schnappbefestigungen (16, 18, 20, 21, 24, 25, 28, 29) mit vorspringenden Teilen und Schlitzen umfassen, wobei die Befestigungen, welche in ihren Platz schnappen, wenn die Verriegelungsfortsätze (18, 19, 26, 27) des oberen Halteteiles gegen das vorspringende Teil (14, 15, 22, 23) des seitlichen Teiles klemmen und den Enden des Rahmens (6) näher liegen als die Verriegelungseinrichtungen (14, 15, 18, 19, 22, 23, 26, 27), die durch Klammerung verriegelt werden können, wenn die Schnellöffnungsbefestigungen (14 bis 29) verriegelt sind.

9. Halter nach Anspruch 8, **dadurch gekennzeichnet, daß** die Schnappbefestigungen vorspringende Teile (16, 17, 24, 25) an den Seiten der seitlichen Teile umfassen, wobei die vorspringenden Teile in Kontakt mit den Schlitzen (20, 21, 28, 29) kommen, die an, den Seiten des Abdeckteiles angeordnet sind, wenn die Einrichtungen (14, 15, 18, 19, 22, 23, 26, 27), die durch Klemmung verriegelt werden können, in einer Verriegelungsposition sind.

10. Halter nach einem der vorhergehenden Ansprüche, **dadurch gekennzeichnet, daß** die Schlitzanordnungen des Rahmens (6) mehrere längliche Schlitze (7) umfassen, um die Montage des Hlaters am Kofferraumdeckel mit unterschiedlichen Strebenschienen (2,3) zu ermöglichen.

11. Halter nach einem der vorhergehenden Ansprüche, **dadurch gekennzeichnet, daß** er aus Polypropen hergestellt ist.

## Revendications

1. Support pour fixer un triangle de signalisation sur la surface sensiblement plate d'un véhicule, telle que la face inférieure de la porte de coffre (1) d'un véhicule, le support comprenant un élément de support inférieur en plastique (6) destiné à être disposé entre la surface plate d'un véhicule à laquelle un triangle de signalisation doit être fixé, et une surface réfléchissante (5) du triangle de signalisation (4), ainsi qu'un élément de support supérieur en plastique (10, 11) destiné à être placé au-dessus de la surface réfléchissante (5) du triangle de signalisation (4), l'élément de support supérieur étant mobile par rapport à l'élément de support inférieur pour que le triangle de signalisation puisse être placé entre les éléments de support inférieur et supérieur et être enlevé de ceux-ci, le support comprenant en outre des moyens de verrouillage (14-29) pour fixer l'élément de support supérieur à l'élément de support inférieur en vue de maintenir le triangle de signalisation entre lesdits éléments de support (6, 10, 11) lorqu'il ne sert pas,
caractérisé en ce que l'élément de support inférieur comprend un cadre allongé ressemblant à une plaque (6), suffisamment long pour pouvoir supporter par le dessous le triangle de signalisation (4) sur toute sa longueur, et servant d'élément de montage pour fixer le support sur la surface ; que le cadre comporte des fentes (7) pour des éléments de fixation (8), et des supports terminaux (12, 13) à chaque extrémité du cadre (6), que le support comprend deux éléments de support supérieur (10, 11), un à chaque extrémité du cadre (6) dont l'un au moins est muni de moyens de verrouillage déverrouillables (14-21 et/ou 22-29), et que les moyens de verrouillage déverrouillables sont des moyens de fixation à déverrouillage rapide (14-21 et/ou 22-29) disposés au voisinage d'au moins une extrémité du cadre (6).

2. Support selon la revendication 1,
caractérisé en ce que les moyens de fixation à déverrouillage rapide (14-21 et/ou 22-29) sont réalisés d'une pièce avec le cadre (6) et l'élément de support supérieur (10, 11).

3. Support selon la revendication 1,
caractérisé en ce que les moyens de fixation à déverrouillage rapide (14-21 et/ou 22-29) sont disposés au voisinage des deux extrémités du cadre (6).

4. Support selon la revendication 1,
caractérisé en ce que les moyens à déverrouillage rapide (14-21 et/ou 22-29) sont agencés de manière à permettre une fixation par serrage de l'élément de support supérieur (10, 11) sur le cadre (6).

5. Support selon la revendication 4,
caractérisé en ce que les supports terminaux (12, 13) situés à chaque extrémité du cadre (6) sont orientés vers le haut, et que les éléments de support supérieurs (10, 11) sont en deux parties : un élément de connexion (33, 42) au voisinage du cadre (6), et un élément de recouvrement (34, 43) situé à une plus grande distance du cadre, l'élément de support supérieur étant articulé au support termina (12, 13) au moyen d'une première portion amincie formant charnière (35, 44) sensiblement transversale au cadre (6), l'élément de support supérieur (10, 11) comprenant en outre une deuxième portion amincie formant charnière (36, 45) écartée de la première portion (35, 44) et parallèle à celle-ci, cet ensemble de portions amincies permettant un écartement de l'élément de support supérieur (10, 11) d'un triangle de signalisation placé sous cet élément, de manière à pouvoir détacher le triangle du support sans qu'il soit nécessaire que l'élément de support supérieur (10, 11) s'étende loin au-délà des extrémités du cadre (6).

6. Support selon la revendication 5,
caractérisé en ce que les supports terminaux (12, 13) comprennent deux portions latérales (31 et 32, 40 et 48) séparées entre elles d'une distance qui correspond sensiblement à la largeur du triangle de signalisation placé dans le support, les moyens de fixation à déverrouillage rapide comprenant deux portions en saillie (14 et 15, 22 et 23) disposées sur les faces extérieures des portions latérales, et l'élément de recouvrement (34, 41) de l'élément de support supérieur (10, 11) comprenant sur des faces latérales deux pointes de verrouillage (18 et 19, 26 et 27), ces pointes de verrouillage présentant des surfaces de serrage (37, 38, 43, 47) qui entrent en contact avec les portions en saillie (14, 15, 22, 23) lorsque l'élément de support supérieur est déplacé par les portions amincies formant charnière (35, 36, 44, 45) vers une position de verrouillage pour effectuer une fixation par serrage entre l'élément de support supérieur et la portion latérale (31, 32, 40, 48).

7. Support selon la revendication 6,
caractérisé en ce que la première portion amincie formant charnière (35, 44) est disposée à une distance X du plan du cadre (6), cette distance correspondant sensiblement à l'épaisseur du triangle de signalisation placé dans le support, la deuxième portion amincie formant charnière (36, 45) et la portion en saillie (14, 15, 22, 23) étant de ce fait sensiblement à la même distance Y de la première portion amincie formant charnière.

8. Support selon la revendication 6 ou 7,
caractérisé en ce que les portions latérales (31, 32, 40, 48) et l'élément de recouvrement (34, 41) comprennent en outre des moyens de fixation par encliquetage (16, 17, 20, 21, 24, 25, 28, 29) munis de portions saillantes et de fentes, les moyens de fixation se mettant instantanément en place lorsque les pointes de verrouillage (18, 19, 26, 27) de l'élément de support supérieur sont serrées contre la portion en saillie (14, 15, 22, 23) de la partie latérale, et étant plus proches des extrémités du cadre (6) que les moyens de verrouillage (14, 15, 18, 19, 22, 23, 26, 27) qui peuvent être verrouillés par serrage lorsque les moyens de fixation à déverrouillage rapide (14-29) sont verrouillés.

9. Support selon la revendication 8,
caractérisé en ce que les moyens de fixation par encliquetage comprennent des portions en saillie (16, 17, 24, 25) sur les côtés des parties latérales, les portions en saillie entrant en contact avec les fentes (20, 21, 28, 29) prévues dans les côtés de l'élément de recouvrement lorsque les moyens (14, 15, 18, 19, 22, 23, 26, 27) qui peuvent être verrouillés par serrage sont en position de verrouillage.

10. Support selon l'une quelconque des revendications précédentes,
caractérisé en ce que les fentes du cadre (6) comprennent plusieurs fentes oblongues (7) pour pemettre le montage du support sur des portes de coffre munis de différents rails entretoises (2, 3).

11. Support selon l'une quelconque des revendications précédentes,
caractérisé en ce qu'il est réalisé en polypropène.
